(19)

**Europäisches Patentamt**

**European Patent Office**

**Office européen des brevets**

(11) **EP 4 704 120 A1**

(12) **EUROPEAN PATENT APPLICATION**

(43) Date of publication:
04.03.2026 Bulletin 2026/10

(21) Application number: 24221550.7

(22) Date of filing: 19.12.2024

(51) International Patent Classification (IPC):
$H01F\ 1/057^{(2006.01)}$ $\qquad$ $H01F\ 41/02^{(2006.01)}$

(52) Cooperative Patent Classification (CPC):
H01F 41/0293; H01F 1/0577

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.08.2024 CN 202411191903

(71) Applicant: Baotou Tianhe Magnetics Technology
Co., Ltd.
Baotou, Inner Mongolia 014030 (CN)

(72) Inventors:
• DONG, Yi
  Baotou, Inner-Mongolia, 014030 (CN)
• YU, Long
  Baotou, Inner-Mongolia, 014030 (CN)
• WU, Zhimin
  Baotou, Inner-Mongolia, 014030 (CN)
• DIAO, Shulin
  Baotou, Inner-Mongolia, 014030 (CN)

• WU, Shujie
  Baotou, Inner-Mongolia, 014030 (CN)
• LIN, Xiaoqin
  Baotou, Inner-Mongolia, 014030 (CN)
• KANG, Zhengdong
  Baotou, Inner-Mongolia, 014030 (CN)
• HU, Zhanjiang
  Baotou, Inner-Mongolia, 014030 (CN)
• WANG, Jinglong
  Baotou, Inner-Mongolia, 014030 (CN)
• YUAN, Yi
  Baotou, Inner-Mongolia, 014030 (CN)
• CHEN, Ya
  Baotou, Inner-Mongolia, 014030 (CN)
• YUAN, Wenjie
  Baotou, Inner-Mongolia, 014030 (CN)

(74) Representative: Engelhard, Markus
Boehmert & Boehmert
Anwaltspartnerschaft mbB
Pettenkoferstrasse 22
80336 München (DE)

(54) **RARE EARTH PERMANENT MAGNET, ITS PREPARATION METHOD AND MOTORS**

(57) The present disclosure discloses a rare earth permanent magnet, its preparation method and motors. The rare earth permanent magnet comprises a light rare earth element and a heavy rare earth element. The light rare earth element must contain Nd and the heavy rare earth element must contain Dy and Tb; along the width direction, the rare earth permanent magnet has two edge portions and one middle portion; along the direction from the outer edge of the edge portion towards the central axis of the middle portion, the weight percentage of Dy gradually increases, while the weight percentage of Tb gradually decreases; the average coercive force of the edge portion is more than that of the middle portion. The rare earth permanent magnet of the present disclosure has a good anti-demagnetization performance

EP 4 704 120 A1

**Description**

## TECHNICAL FIELD OF THE DISCLOSURE

The present disclosure relates to a rare earth permanent magnet and its preparation method, further relates to motors comprising a rare earth permanent magnet.

## BACKGROUND OF THE DISCLOSURE

At present, R-Fe-B rare earth sinter magnets with $R_2Fe_{14}B$ as the main phase are the high-performance magnets among permanent magnets. They are mainly used in voice coil motors for hard disk drives, electric motors for hybrid vehicles, and various household electrical appliances.

The anti-demagnetization ability of a motor refers to its ability to affect external magnetic fields during operation. Generally, the stronger the anti-demagnetization ability of a motor is, the higher its stability and reliability is. The strength of anti-demagnetization ability of a motor is closely related to the magnet materials. For example, for permanent magnet motors, the coercive force of permanent magnet materials plays an important role in anti-demagnetization ability.

Rare earth permanent magnet materials are required to have excellent heat resistance and high coercive force for use in high temperature environments.

CN113506665A discloses a method for improving coercive force of neodymium-iron-boron magnet by efficiently diffusing. The method comprises the following steps: coating the edges of neodymium-iron-boron magnets with grain boundary diffusion agents containing heavy rare earths or light rare earths, or grain boundary diffusion agents without rare earths; and then conducting heat treatment. The coercive force of the magnet obtained by this method still needs to be improved.

CN115732215A discloses a method of preparing a neodymium-iron-boron magnet material with a low demagnetization rate. The method comprises the following steps: performing laser pretreatment on the sintered neodymium-iron-boron magnet material, so as to obtain a pretreated neodymium-iron-boron magnet; performing magnetic sputtering to form a film of heavy rare earth on the surface of pretreated neodymium-iron-boron magnet, so as to obtain a neodymium-iron-boron magnet material with heavy rare earth, where the film of heavy rare earth is made from heavy rare earth elements and auxiliary elements; then performing vacuum diffusion, laser deweighting and electroplating treatment on the neodymium-iron-boron magnet material with heavy rare earth to obtain the neodymium-iron-boron magnet material with a low demagnetization rate.

CN111653404A discloses a neodymium-iron-boron magnet represented by a chemical formula of R1-R2-Fe-M-B. It has a composite structure of a high-coercivity region and a high-remanence region, wherein R1 is a rare earth element comprising at least Nd, R2 is a heavy rare earth element comprising at least one of Dy and/or Tb, and M is a transition metal element comprising at least Co. The neodymium-iron-boron magnet has a high-coercivity region with a high R2 concentration and a high-remanence region with a low R2 concentration. R2 forms a film on two opposite sides of the surface of the base magnet with a base structure of R1-Fe-M-B, wherein the two opposite sides are neither perpendicular to the magnetization direction of the magnet nor perpendicular to the pressing direction during magnet formation; and the direction which is not perpendicular to the magnetization direction of the magnet is different from the direction which is not perpendicular to the pressing direction during magnet formation. By this way, it can reduce the required amount of heavy rare earths, and prevent the occurrence of demagnetization phenomenon at a high temperature.

## SUMMARY OF THE DISCLOSURE

An objective of the present disclosure is to provide a rare earth permanent magnet with a good anti-demagnetization performance. The magnet is suitable for embedded rare earth permanent magnet motors. Another objective of the present disclosure is to provide a method for preparing a rare earth permanent magnet as described. A further objective of the present disclosure is to provide a motor. To achieve the above objectives, the present disclosure adopts the following technical solution.

In one aspect, the present disclosure provides a rare earth permanent magnet comprising a light rare earth element and a heavy rare earth element, wherein the light rare earth element must contain Nd and the heavy rare earth element must contain Dy and Tb; the magnet has a main phase of $R_2Fe_{14}B$, where R is a rare earth element;

along the width direction, the rare earth permanent magnet has two edge portions and one middle portion, wherein both of the edge portions locate separately on both sides of the middle portion and are symmetrical about the central axis of the middle portion;

the edge portion has an outer edge and an inner edge, wherein the outer edge is far away from the middle portion, the inner edge is close to the middle portion; along the direction from the outer edge of the edge portion towards the central axis of the middle portion, the weight percentage of Dy gradually increases, while the weight percentage of Tb gradually decreases;

the average coercive force of the edge portion is more than that of the middle portion.

In the rare earth permanent magnet according to the present disclosure, preferably, the length of the edge portion equals the length of the middle portion; the width of the middle portion is more than the sum of the widths of both of the edge portions.

In the rare earth permanent magnet according to the present disclosure, preferably, the difference between the minimum value of the coercive force of the edge portion and the minimum value of the coercive force of the middle portion is more than 60kA/m.

In the rare earth permanent magnet according to the present disclosure, preferably, along the direction from the outer edge of the edge portion towards the central axis of the middle portion, the maximum weight percentage content of Dy is less than 2 wt% and the minimum weight percentage content of Dy is more than 0.03 wt%, the maximum weight percentage content of Tb is less than 1 wt%, and the maximum weight percentage content of Tb is less than 0.05 wt%.

In the rare earth permanent magnet according to the present disclosure, preferably, the light rare earth element also comprises Pr; based on the total weight of the rare earth permanent magnet, the content of the rare earth element R is more than or equal to 29 wt%.

In another aspect, the present disclosure provides a method for preparing the rare earth permanent magnet, comprising the following steps:

(1) providing a sintered neodymium-iron-boron magnet with a main phase of $R_2Fe_{14}B$, which has two initial edge portions and one initial middle portion along the width direction; both of the initial edge portions are located separately on both sides of the initial middle portion and are symmetrical about the central axis of the initial middle portion; wherein R is a rare earth element;

(2) attaching a substance containing terbium onto one surface of the initial edge portion along the orientation direction, and drying it; then, attaching a substance containing dysprosium onto one surface of the initial middle portion, and drying it, so as to obtain a first attachment;

(3) attaching a substance containing terbium onto the other surface of the initial edge portion of the first attachment along the orientation direction, and drying it; then, attaching a substance containing dysprosium onto the other surface of the initial middle portion, and drying it, so as to obtain a second attachment;

(4) heat-treating the second attachment to obtain the rare earth permanent magnet; wherein the initial edge portion correspondingly turns into the edge portion, and the initial middle portion correspondingly turns into the middle portion.

According to preparation method of the present disclosure, preferably, in step (1), in the sintered neodymium-iron-boron magnet, R is a rare earth element comprising Nd and Pr.

According to preparation method of the present disclosure, preferably, in step (1), based on the total weight of the sintered neodymium-iron-boron magnet, the sintered neodymium-iron-boron magnet comprises:

PrNd 28-32 wt%,
B 0.89-0.98 wt%,
Dy 0.01-1.15 wt%,
Cu 0.01-0.25 wt%,
Co 0.01-1.85 wt%,
Ga 0.01-0.30 wt%,
M 0.01-0.20 wt%, and
Fe balance;
wherein M is at least one selected from the group consisting of Ti, Zr, Mo and Nb;
wherein the weight ratio of Pr to Nd is 1:3-1:4.

According to preparation method of the present disclosure, preferably, in step (2), both of the drying temperatures are 120-200 °C; the weight ratio of terbium gain is 0.075-0.25 wt%; the weight ratio of dysprosium gain is 0.2-0.425 wt%; in step (3), both of the drying temperatures are 120-200 °C; the weight ratio of terbium gain is 0.075-0.25 wt%; the weight ratio of dysprosium gain is 0.2-0.425 wt%.

In a further aspect, the present disclosure provides a motor comprising the rare earth permanent magnet; wherein the attenuation ratio $\alpha$ of the counter electromotive force of the motor is less than 0.5%; $\alpha$ is calculated using the following formula:

$$\alpha= (V_0 - V_t) / V_0 \times 100\%;$$

wherein $V_0$ is the initial counter electromotive force at room temperature; $V_t$ is the counter electromotive force at room temperature after high-temperature loading experiments.

The rare earth permanent magnet of the present disclosure shows a good anti-demagnetization performance, so it is suitable for embedded rare earth permanent magnet motors. The present disclosure can provide rare earth permanent magnets with specific coercive force distribution and good anti-demagnetization performance. The process of the present disclosure shows good repeatability.

## BRIEF SUMMARY OF THE DRAWINGS

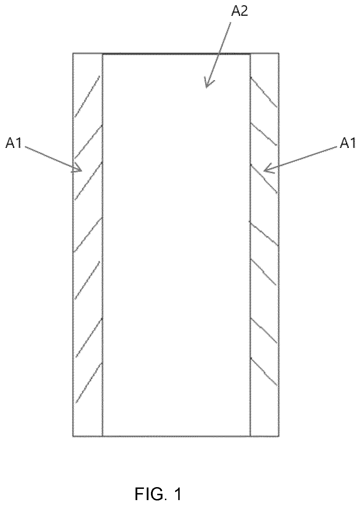

Fig. 1 is the sketch of the initial edge portions and the initial middle portion of the sintered neodymium-iron-boron magnet of the present disclosure. A1 represents the initial edge portion. A2 represents the middle portion.

## DETAIL DESCRIPTION OF THE DISCLOSURE

The present disclosure will be further explained with specific embodiments, but the protection scope of the present disclosure is not limited to these embodiments.

"Coercive force" mentioned in the present disclosure is also known as intrinsic coercive force, which refers to the magnetic field strength at which the magnetization strength of the magnet is decreased along the saturation hysteresis loop to zero when the saturation magnetization state of the magnet is decreased monotonically to zero and increased reversely. The coercive force is usually referred to as $H_{cj}$ or $MHc$, with a unit of Oersted (Oe) or Ampere per meter (A/m). $1 \text{Oe} = 79.6 \text{A/m}$. $H_{cj}$ is the intrinsic coercive force at room temperature.

"Remanence" mentioned in the present disclosure refers to the numerical value of the magnetic flux density when the magnetic field strength on the saturation hysteresis loop is zero. It is usually represented by $Br$ or $Mr$, with the unit of Tesla (T) or Gauss (Gs), respectively.

In the present disclosure, "inert gases" comprises helium, neon, argon, krypton, and xenon.

"Inert atmosphere" refers to an atmosphere composed of inert gases, in which the performance of magnets is not affected.

### < Rare earth permanent magnet >

The rare earth permanent magnet of the present disclosure comprises a light rare earth element and a heavy rare earth element, wherein the light rare earth element must contain Nd, and the heavy rare earth element must contain Dy and Tb. The magnet has a main phase of $R_2Fe_{14}B$, where R is a rare earth element. In some embodiments, R is a light rare earth element. The light rare earth element also comprises Pr. The weight ratio of Pr to Nd is 1:3-1:4. Based on the total weight of the rare earth permanent magnet, the content of rare earth element R is more than or equal to 29 wt%, preferable more than or equal to 30 wt%, more preferable more than or equal to 31 wt% and less than or equal to 33 wt%.

The rare earth permanent magnet of the present disclosure may have a hexahedral structure with two edge portions and one middle portion. Both of the edge portions are located separately on both sides of the middle portion and are symmetrical about the central axis of the middle portion.

In some embodiments, the rare earth permanent magnet has a cuboid structure. The rare earth permanent magnet has a length more than its width. The length of the edge portion is the same as the length of the middle portion. The width of the middle portion is more than the sum of the widths of both of the edge portions. The width of the edge portion may be 1.5-3.5 mm. The width of the middle portion may be 6-20 mm. In some embodiments, the width of the edge portion is 2-3.1 mm; the width of the middle portion is 10-15 mm. In the present disclosure, the thickness of the rare earth permanent magnet may be 1.5-6.5 mm, preferably 2.5-5.5 mm, and more preferably 3-5.0 mm. The orientation direction is along the thickness direction.

The edge portion has an outer edge and an inner edge, wherein the outer edge is far away from the middle portion, and the inner edge is close to the middle portion. In some embodiments, the boundary between the inner edge and the middle portion is clear. In some other embodiments, the boundary between the inner edge and the middle portion is not clear. There is a partial fusion between the inner edge and the middle portion.

Along the direction from the outer edge of the edge portion towards the central axis of the middle portion, the weight percentage of Dy gradually increases, while the weight percentage of Tb gradually decreases.

Along the direction from the outer edge of the edge portion towards the central axis of the middle portion, the minimum value of Dy weight percentage content is more than 0.03 wt%, and the maximum value of Dy weight percentage content is less than 2 wt%. Preferably, the maximum value of Dy weight percentage content is less than 1.5 wt% along the direction from the outer edge of the edge portion towards the central axis of the middle portion. More preferably, the maximum value of Dy weight percentage content is less than 1 wt% along the direction from the outer edge of the edge portion towards the central axis of the middle portion. According to a specific embodiment of the present disclosure, the minimum value of Dy weight percentage content is more than 0.5 wt% and the maximum value of Dy weight percentage content is less than 2 wt% along the direction from the outer edge of the edge portion towards the central axis of the middle portion.

The maximum value of Tb weight percentage content is less than 1 wt% and the minimum value of Tb weight percentage content is less than 0.05 wt% along the direction from the outer edge of the edge portion towards the central axis of the middle portion. Preferably, the maximum value of Tb weight percentage content is less than 0.8 wt% along the direction from the outer edge of the edge portion towards the central axis of the middle portion. More preferably, the maximum value of Tb weight percentage content is less than 0.7 wt% along the direction from the outer edge of the edge portion towards the central axis of the middle portion.

According to a specific embodiment of the present disclosure, the difference between the maximum and minimum value of the weight percentage of Dy along the direction from the outer edge of the edge portion towards the central axis of the middle portion is more than 0.2 wt%.

The average coercive force of the edge portions is more than that of the middle portion. The difference between the minimum value of the coercive force of the edge portions and the minimum value of the coercive force of the middle portion is more than 60 kA/m, for example, the difference may be more than 100 kA/m, or the difference may be more than 120 kA/m. According to an embodiment of the present disclosure, the minimum value of the coercive force of the edge portions is more than or equal to 1950 kA/m, for example, the minimum value may be more than 2015 kA/m. According to an embodiment of the present disclosure, the minimum value of the coercive force of the middle portion is more than or equal to 1850 kA/m, for example, the minimum value may be more than 1875 kA/m.

The inventors of the present disclosure found that such rare earth permanent magnets have good anti-demagnetization performance besides high remanence and high coercive force. So they are suitable for embedded rare earth permanent magnet motors.

**<Preparation method>**

The present disclosure also provides a method for preparing the rare earth permanent magnet, comprising the following steps: (1) providing an initial sintered neodymium-iron-boron magnet; (2) obtaining a first attachment; (3) obtaining a second attachment; (4) heat-treating. This is conducive to obtaining a rare earth permanent magnet having a hexahedral structure with two edge portions and a middle portion as described above.

Providing an initial sintered neodymium-iron-boron magnet

An initial sintered neodymium-iron-boron magnet with a main phase of $R_2Fe_{14}B$ is provided. The sintered neodymium-iron-boron magnet has a hexahedral structure. Along the width direction, it has two initial edge portions and one initial middle portion. Both of the initial edge portions are located separately on both sides of the initial middle portion and are symmetrical about the central axis of the initial middle portion.

In the sintered neodymium-iron-boron magnet, R is a rare earth element, comprising Nd and Pr. Based on the total weight of the sintered neodymium-iron-boron magnet, the sintered neodymium-iron-boron magnet comprises the following components: PrNd 28-32 wt%, B 0.89-0.98 wt%, Dy 0.01-1.15 wt%, Cu 0.01-0.25 wt%, Co 0.01-1.85 wt%, Ga 0.01-0.30 wt%, M 0.01-0.20 wt%, Fe balance; wherein M is at least one selected from the group consisting of Ti, Zr, Mo, and Nb; wherein the weight ratio of Pr to Nd is 1:3-1:4. In a preferred embodiment, the sintered neodymium-iron-boron magnet is composed of the above components.

Based on the total weight of the sintered neodymium-iron-boron magnet, the PrNd content is preferably 29.0-31 wt%, and further preferably 29.5-30.5 wt%. The B content is preferably 0.93-0.97 wt%, and more preferably 0.94-0.96 wt%. The weight percentage of Dy is preferably 0.1-1.0 wt%, and more preferably 0.4-0.7 wt%. The Cu content is preferably 0.05-0.25 wt%, and more preferably 0.10-0.20 wt%. The Co content is preferably 0.1-1.5 wt%, more preferably 0.5-1.3 wt%, and even more preferably 1.0-1.15 wt%. The Ga content is preferably 0.1-0.25 wt%, more preferably 0.15-0.23 wt%, such as 0.18 wt%, 0.21 wt%. The M content is preferably 0.05-0.20 wt%, more preferably 0.10-0.18 wt%, and even more preferably 0.15-0.17 wt%. M is preferably Ti.

Obtaining a first attachment

A substance containing terbium is attached onto one surface of the initial edge portion of the sintered neodymium-iron-boron magnet along the orientation direction, and the magnet is dried. Then, a substance containing dysprosium is attached onto one surface of the initial middle portion. The magnet is dried to obtain a first attachment. The surface of the initial edge portion of the sintered neodymium-iron-boron magnet and the surface of the initial middle portion are approximately coplanar.

The substance containing terbium may be attached onto one surface of the initial edge portion by printing or spraying. The substance containing terbium may be hydrogenated terbium or terbium metal and its alloy powder. The substance containing terbium (such as terbium powder) may be blended with an organic solvent to form terbium slurry, with a mass concentration of 25-85 wt%, preferably 45-80 wt%, and more preferably 60-80 wt%. The organic solvent may be terpenic oil. In this way, terbium may be accurately attached onto the magnet, showing a high adhesion rate and good repeatability.

The weight ratio of terbium gain is controlled to be 0.075-0.25 wt%, preferably 0.085-0.2 wt%, and more preferably 0.095-0.14 wt%. The weight ratio of terbium gain = (the weight of the magnet after coating terbium metal - original weight of the magnet before coating terbium metal)/original weight of the magnet before coating terbium metal × 100 %. The drying temperature may be between 120-200 °C, preferably between 150-200 °C, and more preferably between 180-190 °C.

According to an embodiment of the present disclosure, terbium is attached by printing. Printing equipment may be used during printing.

The substance containing dysprosium may be attached onto one surface of the initial middle portion by printing or spraying. The substance containing dysprosium may be hydrogenated dysprosium or dysprosium metal and its alloys. The substance containing dysprosium (such as dysprosium powder) may be blended with an organic solvent to form dysprosium slurry, with a mass concentration of 25-85 wt%, preferably 45-80 wt%, and more preferably 60-80 wt%. The organic solvent may be terpenic oil. In this way, dysprosium may be accurately attached onto the magnet, showing a high adhesion rate and good repeatability.

The weight ratio of dysprosium gain is controlled to be 0.2-0.425 wt%, preferably 0.3-0.325 wt%. The weight ratio of dysprosium gain = (the weight of the magnet after coating dysprosium metal - original weight of the magnet before coating dysprosium metal)/ original weight of the magnet before coating dysprosium metal × 100 %. The drying temperature may be between 120-200 °C, preferably between 150-200 °C, and more preferably between 180-190 °C.

<u>Obtaining a second attachment</u>

A substance containing terbium is attached onto the other surface of the initial edge portion of the first attachment along the orientation direction, and the magnet is dried. Then, a substance containing dysprosium is attached onto the other surface of the initial middle portion. The magnet is dried to obtain a second attachment. The other surface of the initial edge portion of the first attachment and the other surface of the initial middle portion are approximately coplanar.

The first attachment may be flipped over, and terbium or dysprosium may be attached separately to the other surface without heavy rare earth. The specific process is the same as that of obtaining the first attachment.

The substance containing terbium may be attached onto the other surface of the initial edge portion of the first attachment by printing or spraying, wherein the substance containing terbium may be hydrogenated terbium or terbium metal and its alloy powder. The substance containing terbium (such as terbium powder) may be blended with an organic solvent to form terbium slurry, with a mass concentration of 25-85 wt%, preferably 45-80 wt%, and more preferably 60-80 wt%. The organic solvent may be terpenic oil. In this way, terbium may be accurately attached onto the magnet, showing a high adhesion rate and good repeatability.

The weight ratio of terbium gain is controlled to be 0.075-0.25 wt%, preferably 0.085-0.14 wt%, and more preferably 0.095-0.12 wt%. The weight ratio of terbium gain = (the weight of the first attachment after coating terbium metal - original weight of the first attachment before coating terbium metal)/original weight of the first attachment before coating terbium metal × 100 %. The drying temperature may be between 120-200 °C, preferably between 150-200 °C, and more preferably between 180-190 °C.

The substance containing dysprosium may be attached onto the other surface of the initial middle portion by printing or spraying. The substance containing dysprosium may be hydrogenated dysprosium or dysprosium metal and its alloy powder. The substance containing dysprosium (such as dysprosium powder) may be blended with an organic solvent to form dysprosium slurry, with a mass concentration of 25-85 wt%, preferably 45-80wt%, and more preferably 60-80 wt%. The organic solvent may be terpenic oil.

The weight ratio of dysprosium gain is controlled to be 0.2-0.425 wt%, preferably 0.3-0.325 wt%. The weight ratio of dysprosium gain = (the weight of the first attachment after coating dysprosium metal - original weight of the first attachment before coating dysprosium metal)/ original weight of the first attachment before coating dysprosium metal × 100 %. The drying temperature may be between 120-200 °C, preferably between 150-200 °C, and more preferably between 180-190 °C. In this way, terbium may be accurately attached onto the magnet, showing a high adhesion rate and good repeatability.

Heat treatment

The second attachment is heat-treated to obtain the rare earth permanent magnet.

In the present disclosure, the second attachment may be cooled after several times of pre-heating and pre-insulation, followed by a post-heating and post-insulation, and then cooled again to obtain a rare earth permanent magnet. Preferably, the pre-heating process comprises three to four times of pre-heating, such as four times of pre-heating, namely the first pre-heating stage, the second pre-heating stage, the third pre-heating stage, and the fourth pre-heating stage. Each pre-heating stage is followed by a pre-insulation stage.

The first pre-heating stage and the first pre-insulation stage comprise: heating the second attachment to 100-120 °C and holding it at this temperature for 1-1.5 hours;

the second pre-heating stage and the second pre-insulation stage comprise: increasing the temperature from 100-120 °C to 180-200 °C and holding at this temperature for 1-1.5 hours;
the third pre-heating stage and the third pre-insulation stage comprise: increasing the temperature from 180-200 °C to 450-550 °C and holding at this temperature for 1-1.5 hours; Preferably, increasing the temperature to 500-530 °C;
the fourth pre-heating stage and the fourth pre-insulation stage comprise: continually increasing the temperature to 850-950 °C, holding at this temperature for 8-24 hours, and preferably continually increasing the temperature to 900-920 °C. The preferred insulation duration is 10-11 hours.

In the present disclosure, the inert gas cooling may be the argon gas cooling.

The post-heating and post-insulation comprise: increasing the temperature to 450-520 °C and holding at this temperature for 4-7 hours. Preferably, increasing the temperature to 490-510 °C. The preferred insulation time is 5-6 hours. This is conducive to obtaining rare earth permanent magnets with good performance consistency.

According to an embodiment of the present disclosure, the second attachment is heated to 100-200 °C and held at this temperature for 1-3 hours. Then the temperature is increased to 450-550 °C and held at this temperature for 1-1.5 hours. Then the temperature is continually increased to 850-950 °C and held at this temperature for 8-24 hours. Then, the heating is stopped and the temperature was decreased to below 90 °C using inert gas. Then, the temperature is increased to 450-520 °C, held at this temperature for 4-7 hours, and the heating is stopped. The second attachment is cooled down to below 60 °C using inert gas to obtain a rare earth permanent magnet. This is conducive to obtaining rare earth permanent magnets with stable performances.

**<Motor>**

The present disclosure also provides a motor, comprising the rare earth permanent magnet mentioned above. The attenuation ratio $\alpha$ of the counter electromotive force of the motor is less than 0.5%. Specifically, the attenuation ratio $\alpha$ of the counter electromotive force of the motor is less than 0.30 % at 120 °C, 0.37 % at 140 °C, and 0.40 % at 160 °C, respectively. The rare earth permanent magnet of the present disclosure is installed in a motor, the initial counter electromotive force $V_0$ at room temperature (e.g. 25 °C) is measured; loading experiments are performed at 120 °C, 140 °C, and 160 °C, and then the counter electromotive force $V_t$ is measured after the temperature decreases to the room temperature (e.g. 25 °C). The attenuation ratio $\alpha$ is calculated using the following formula:

$$\alpha = （V_0 - V_t）/V_0 \times 100\%.$$

**<Raw Material Description>**

Terbium slurry: terbium slurry with a mass concentration of 75 wt% is composed of terbium powder with terpenic oil. Dysprosium slurry: dysprosium slurry with a mass concentration of 75 wt% is composed of dysprosium powder with terpenic oil.

**<Testing Method>**

Measurement of magnetic properties: a magnetic tester from Metis in Belgium is used to measure the magnetic properties at room temperature.

Unless otherwise specified, the following "%" represents weight percentage.

Example 1

A sintered neodymium-iron-boron magnet with a dimension of 39 mm (length) × 17.8 mm (width) × 4 mm (thickness) was provided. The surface of the magnet was polished. The composition of sintered neodymium-iron-boron magnet is shown in Table 1.

Table 1

| Components | PrNd | B | Dy | Cu | Co | Ga | Ti | Fe |
|---|---|---|---|---|---|---|---|---|
| wt% | 29.97 | 0.95 | 0.54 | 0.19 | 1.08 | 0.21 | 0.15 | balance |
| Note: the weight ratio of Pr to Nd is 1:3. | | | | | | | | |

As shown in Fig. 1, along the width direction, the sintered neodymium-iron-boron magnet had two initial edge portions A1 and one initial middle portion A2. Both of the initial edge portions A1 were located separately on both sides of the initial middle portion A2 and are symmetrical about the central axis of the initial middle portion A2.

The sintered neodymium-iron-boron magnet was placed inside printing equipment. Along the orientation direction, terbium slurry was attached respectively onto one surface (with an area of 39 mm × 2.8 mm) of both of initial edge portions A1 by printing, and dried at 180 °C. The weight ratio of terbium (Tb) gain is 0.074 %. Then, dysprosium slurry was attached onto one surface (with an area of 39 mm × 12.2 mm) of the initial middle part A2 by printing, and dried at 180 °C to obtain a first attachment. The weight ratio of dysprosium (Dy) gain is 0.31 %.

The first attachment was flipped over. The above process was repeated, so that terbium slurry was attached respectively onto the other surface (i.e. the surface without terbium printed, with an area of 39 mm × 2.8 mm) of both of the initial edge portions A1 by printing, and dried at 180 °C. The weight ratio of terbium (Tb) gain is 0.078 %. Then, dysprosium slurry was attached onto the other surface (with an area of 39 mm × 12.2 mm) of the initial middle part A2 by printing, and dried at 180 °C to obtain a second attachment. The weight ratio of dysprosium (Dy) gain is 0.32 %.

The second attachment was heat-treated to obtain a rare earth permanent magnet. The heat-treatment process is as following: the temperature was increased to 100 °C and held at 100 °C for 1 hour, then the temperature was increased to 200 °C and held at 200 °C for 1 hour, then the temperature was increased to 500 °C and held at 500 °C for 1 hour; the temperature was continually increased to 920 °C and held at 920 °C for 10 hours, then the heating was stopped and the temperature was decreased to below 90 °C using argon gas; the temperature was continually increased to 490 °C and held at 490 °C for 5 hours, the heating was stopped and the temperature was decreased to below 60 °C using argon gas to obtain a rare earth permanent magnet. The initial edge portion A1 of the sintered neodymium-iron-boron magnet correspondingly turns into the edge portion, i.e. the edge portion of the rare earth permanent magnet had the same shape, width and length as those of the initial edge portion A1 of the sintered neodymium-iron-boron magnet. The initial middle portion A2 of the sintered neodymium-iron-boron magnet correspondingly turns into the middle portion, i.e. the middle portion of the rare earth permanent magnet had the same shape, width and length as those of the initial middle portion A2 of the sintered neodymium-iron-boron magnet.

Along the width direction (17.8 mm in width) of the rare earth permanent magnet, the rare earth permanent magnet was sliced with a width of 1 mm (the slice had a dimension of 39 mm × 1.0 mm × 4 mm). Specifically, the rare earth permanent magnet obtained from the sintered neodymium-iron-boron magnet shown in Fig. 1 was sliced from right to left to obtain 7 slices. Then, the obtained slices were cut in the middle part in the length direction, and two samples (with dimensions of 5 mm × 1.0 mm × 4 mm) were selected. One sample was measured for magnetic properties, and the other sample was measured for composition. The measurement results are shown in Table 2. Only one edge portion was analyzed, due to the symmetry of the edge portions.

Table 2

| No. | $Br$ (T) | $H_{cj}$ (kA/m) | weight percentage of Dy (wt%) | weight percentage of Tb (wt%) |
|---|---|---|---|---|
| Slice 1 (edge portion) | 1.428 | 2123.2 | 0.520 | 0.460 |
| Slice 2 (edge portion) | 1.423 | 2077.3 | 0.534 | 0.348 |
| Slice 3 (edge portion) | 1.432 | 2018.0 | 0.625 | 0.286 |
| Slice 4 (middle portion) | 1.425 | 1987.0 | 0.706 | 0.115 |
| Slice 5 (middle portion) | 1.424 | 1936.8 | 0.843 | 0.061 |
| Slice 6 (middle portion) | 1.430 | 1896.4 | 0.864 | 0.017 |

(continued)

| No. | $Br$ (T) | $H_{cj}$ (kA/m) | weight percentage of Dy (wt%) | weight percentage of Tb (wt%) |
|---|---|---|---|---|
| Slice 7 (middle portion) | 1.427 | 1878.3 | 0.889 | 0.009 |
| Note: slice 3 comprises a bit of the middle portion. | | | | |

It can be seen that in the rare earth permanent magnet of the present disclosure, the weight percentage of Dy gradually increases and the weight percentage of Tb gradually decreases along the direction from the outer edge of the edge portion towards the central axis of the middle portion. The average coercive force of the edge portions is more than that of the middle portion.

Comparative example 1

The difference between comparative example 1 and example 1 is only that the attached terbium (Tb) on the initial edge portion was replaced with dysprosium (Dy). Specifically, as follows:

A sintered neodymium-iron-boron magnet with a dimension of 39 mm (length) × 17.8 mm (width) × 4 mm (thickness) was provided. The surface of the magnet was polished. The composition of sintered neodymium-iron-boron magnet is shown in Table 1.

As shown in Fig. 1, along the width direction, the sintered neodymium-iron-boron magnet had two initial edge portions A1 and one initial middle portion A2. Both of the initial edge portions A1 were located separately on both sides of the initial middle portion A2 and are symmetrical about the central axis of the initial middle portion A2.

The sintered neodymium-iron-boron magnet was placed inside printing equipment. Along the orientation direction, dysprosium slurry was attached respectively onto one surface (with an area of 39 mm × 2.8 mm) of both of the initial edge portions A1 by printing, and dried at 180 °C. The weight ratio of dysprosium (Dy) gain is 0.074 %. Then, dysprosium slurry was attached onto one surface (with an area of 39 mm × 12.2 mm) of the initial middle part A2 by printing, and dried at 180 °C to obtain a first attachment. The weight ratio of dysprosium (Dy) gain is 0.31 %.

The first attachment was flipped over. The above process was repeated, so that dysprosium slurry was attached onto the other surface (i.e. the surface without dysprosium, the areas were 39 mm × 2.8 mm, respectively) of both of the initial edge portions A1 by printing, and dried at 180 °C. The weight ratio of dysprosium (Dy) gain is 0.078 %. Then, dysprosium slurry was attached onto the other surface (with an area of 39 mm × 12.2 mm) of the initial middle part A2 by printing, and dried at 180 °C to obtain a second attachment. The weight ratio of dysprosium (Dy) gain is 0.32 %.

The second attachment was heat-treated to obtain a rare earth permanent magnet. The heat-treatment process is as following: the temperature was increased to 100 °C and held at 100 °C for 1 hour, then the temperature was increased to 200 °C and held at 200 °C for 1 hour, then the temperature was increased to 500 °C and held at 500 °C for 1 hour; the temperature was continually increased to 920 °C and held at 920 °C for 10 hours, then the heating was stopped and the temperature was decreased to below 90 °C using argon gas; the temperature was continually increased to 490 °C and held at 490 °C for 5 hours, the heating was stopped and the temperature was decreased to below 60 °C using argon gas to obtain a rare earth permanent magnet. The initial edge portion A1 of the sintered neodymium-iron-boron magnet correspondingly turns into the edge portion, i.e. the edge portion of the rare earth permanent magnet had the same shape, width and length as those of the initial edge portion A1 of the sintered neodymium-iron-boron magnet. The initial middle portion A2 of the sintered neodymium-iron-boron magnet correspondingly turns into the middle portion, i.e. the middle portion of the rare earth permanent magnet had the same shape, width and length as those of the initial middle portion A2 of the sintered neodymium-iron-boron magnet.

Along the width direction (17.8 mm in width) of the rare earth permanent magnet, the rare earth permanent magnet was sliced with a width of 1mm (the slice had a dimension of 39 mm × 1.0 mm × 4 mm). Specifically, the rare earth permanent magnet obtained from the sintered neodymium-iron-boron magnet shown in Fig. 1 was sliced from right to left to obtain 7 slices. Then, the obtained slices were cut in the middle part in the length direction, and two samples (with dimensions of 5 mm × 1.0 mm × 4 mm) were selected. One sample was measured for magnetic properties, and the other sample was measured for composition. The measurement results are shown in Table 3. Only one edge portion was analyzed, due to the symmetry of the edge portions.

Table 3

| No. | $Br$ (T) | $H_{cj}$ (kA/m) | weight percentage of Dy (wt%) |
|---|---|---|---|
| Slice 1 (edge portion) | 1.425 | 1881.7 | 0.835 |
| Slice 2 (edge portion) | 1.421 | 1880.2 | 0.847 |

(continued)

| No. | $Br$ (T) | $H_{cj}$ (kA/m) | weight percentage of Dy (wt%) |
|---|---|---|---|
| Slice 3 (edge portion) | 1.428 | 1905.4 | 0.838 |
| Slice 4 (middle portion) | 1.431 | 1899.6 | 0.841 |
| Slice 5 (middle portion) | 1.426 | 1890.1 | 0.843 |
| Slice 6 (middle portion) | 1.432 | 1895.4 | 0.876 |
| Slice 7 (middle portion) | 1.424 | 1902.9 | 0.851 |

The rare earth permanent magnets obtained in example 1 and comparative example 1 were installed in motors, respectively. The counter electromotive force $V_0$ at room temperature was measured. The loading experiments were performed at high temperatures of 120 °C, 140 °C, and 160 °C, and then the counter electromotive force $V_t$ was measured after the temperature decreases to the room temperature. The attenuation ratio $\alpha$ is calculated using the following formula:

$$\alpha = (V_0 - V_t)/V_0 \times 100\%.$$

The calculation results are shown in Table 4.

Table 4

| No. | $\alpha$ (120°C) | $\alpha$ (140°C) | $\alpha$ (160°C) |
|---|---|---|---|
| Example 1 | 0.23 % | 0.35 % | 0.38 % |
| Comparative example 1 | 0.34 % | 0.49 % | 3.31 % |

It can be seen from Table 4, the attenuation ratio of example 1 is very small (less than 0.5 %), indicating that the demagnetization is relatively weak. However, in comparative example 1, the loss of counter electromotive force was 3.31 % at 160 °C, indicating a relatively strong demagnetization occurred.

The present disclosure is not limited to the above embodiments, and any modifications, improvements, or replacements that can be conceived by those skilled in the art without departing from the essence of the present disclosure fall within the scope of the present disclosure.

**Claims**

1.    A rare earth permanent magnet, comprising a light rare earth element and a heavy rare earth element, wherein the light rare earth element must contain Nd and the heavy rare earth element must contain Dy and Tb; the magnet has a main phase of $R_2Fe_{14}B$, where R is a rare earth element;

wherein in the width direction, the rare earth permanent magnet has two edge portions and one middle portion, wherein both of the edge portions locate separately on both sides of the middle portion and are symmetrical about the central axis of the middle portion;
wherein the edge portion has an outer edge and an inner edge, wherein the outer edge is far away from the middle portion, the inner edge is close to the middle portion; along the direction from the outer edge of the edge portion towards the central axis of the middle portion, the weight percentage of Dy gradually increases, while the weight percentage of Tb gradually decreases;
wherein the average coercive force of the edge portion is more than that of the middle portion.

2.    The rare earth permanent magnet according to claim 1, wherein the length of the edge portion equals the length of the middle portion; the width of the middle portion is more than the sum of the widths of both of the edge portions.

3.    The rare earth permanent magnet according to any of claims 1 - 2, wherein the difference between the minimum value of the coercive force of the edge portion and the minimum value of the coercive force of the middle portion is more than 60kA/m.

4.    The rare earth permanent magnet according to any of claims 1 - 3, wherein along the direction from the outer edge of the edge portion towards the central axis of the middle portion, the maximum weight percentage content of Dy is less than 2 wt%, the minimum weight percentage content of Dy is more than 0.03 wt%, the maximum weight percentage content of Tb is less than 1wt%, the minimum weight percentage content of Tb is less than 0.05 wt%.

5. The rare earth permanent magnet according to claim 4, wherein the light rare earth element also comprises Pr; based on the total weight of the rare earth permanent magnet, the content of the rare earth element R is not less than 29 wt%.

6. A method for preparing the rare earth permanent magnet according to any of claims 1 - 5, comprising the following steps:

(1) providing a sintered neodymium-iron-boron magnet with a main phase of $R_2Fe_{14}B$, which has two initial edge portions and one initial middle portion along the width direction; both of the initial edge portions are located separately on both sides of the initial middle portion and are symmetrical about the central axis of the initial middle portion; wherein R is a rare earth element;

(2) attaching a substance containing terbium onto one surface of the initial edge portion along the orientation direction, and drying it; then, attaching a substance containing dysprosium onto one surface of the initial middle portion, and drying it, so as to obtain a first attachment;

(3) attaching a substance containing terbium onto the other surface of the initial edge portion of the first attachment along the orientation direction, and drying it; then, attaching a substance containing dysprosium onto the other surface of the initial middle portion, and drying it, so as to obtain a second attachment;

(4) heat-treating the second attachment to obtain the rare earth permanent magnet; wherein the initial edge portion correspondingly turns into the edge portion, and the initial middle portion correspondingly turns into the middle portion.

7. The preparation method according to claim 6, wherein in step (1), in the sintered neodymium-iron-boron magnet, R is a rare earth element comprising Nd and Pr.

8. The preparation method according to any of claims 6-7, wherein in step (1), based on the total weight of the sintered neodymium-iron-boron magnet, the sintered neodymium-iron-boron magnet comprises:

PrNd 28-32 wt%,
B 0.89-0.98 wt%,
Dy 0.01-1.15 wt%,
Cu 0.01-0.25 wt%,
Co 0.01-1.85 wt%,
Ga 0.01-0.30 wt%,
M 0.01-0.20 wt%, and
Fe balance;
wherein M is at least one selected from the group consisting of Ti, Zr, Mo and Nb;
wherein the weight ratio of Pr to Nd is 1:3-1:4.

9. The preparation method according to any of claims 6-8, wherein

in step (2), both of the drying temperatures are 120-200 °C; the weight ratio of terbium gain is 0.075-0.25 wt%; the weight ratio of dysprosium gain is 0.2-0.425 wt%;
in step (3), both of the drying temperatures are 120-200 °C; the weight ratio of terbium gain is 0.075-0.25 wt%; the weight ratio of dysprosium gain is 0.2-0.425 wt%.

10. A motor, comprising the rare earth permanent magnet according to any of claims 1 - 5, wherein

an attenuation ratio $\alpha$ of counter electromotive force of the motor is less than 0.5 %; $\alpha$ is calculated using the following formula:

$$\alpha = (V_0 - V_t)/V_0 \times 100\%;$$

wherein $V_0$ is an initial counter electromotive force at room temperature; $V_t$ is a counter electromotive force at room temperature after high-temperature loading experiments.

FIG. 1

# EUROPEAN SEARCH REPORT

**Application Number**

EP 24 22 1550

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/109468 A1 (NATSUMEDA MITSUTOSHI [JP] ET AL) 6 May 2010 (2010-05-06) * paragraphs [0045], [0065], [0086], [0088], [0089]; claim 8; figures 5A,5B,12A; table 1 * | 1-10 | INV. H01F1/057 H01F41/02 |
| A | CN 117 854 867 A (YANTAI ZHENGHAI MAGNETIC MAT CO LTD ET AL.) 9 April 2024 (2024-04-09) * claim 10; figure 1; example 1 * | 1-10 | |
| A | CN 116 469 635 A (ZHEJIANG INNUOVO MAGNETICS CO LTD) 21 July 2023 (2023-07-21) * claims 5-10; figure 2 * | 1-10 | |
| A | US 2022/203440 A1 (TAKAZAWA MAYUMI [JP] ET AL) 30 June 2022 (2022-06-30) * figures 1,3,8 * | 1-10 | |
| A | US 2022/328219 A1 (LIAO MINGHUO [CN] ET AL) 13 October 2022 (2022-10-13) * claims 1-9; figures 3,4 * | 1-10 | TECHNICAL FIELDS SEARCHED (IPC) H01F |
| A | CN 113 035 556 A (JL MAG RARE EARTH CO LTD) 25 June 2021 (2021-06-25) * claims 1-10; figure 5 * | 1-10 | |
| A | US 2020/005996 A1 (YANG KUNKUN [CN] ET AL) 2 January 2020 (2020-01-02) * claims 1-20; figure 6 * | 1-10 | |

The present search report has been drawn up for all claims

| Place of search | Date of completion of the search | Examiner |
|---|---|---|
| Munich | 26 May 2025 | Primus, Jean-Louis |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 1550

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2025

| Patent document cited in search report | | | Publication date | Patent family member(s) | | Publication date |
|---|---|---|---|---|---|---|
| US 2010109468 | A1 | | 06-05-2010 | CN | 101641854 A | 03-02-2010 |
| | | | | EP | 2131474 A1 | 09-12-2009 |
| | | | | JP | 5310544 B2 | 09-10-2013 |
| | | | | JP | WO2008123251 A1 | 15-07-2010 |
| | | | | US | 2010109468 A1 | 06-05-2010 |
| | | | | WO | 2008123251 A1 | 16-10-2008 |
| CN 117854867 | A | | 09-04-2024 | NONE | | |
| CN 116469635 | A | | 21-07-2023 | CN | 116469635 A | 21-07-2023 |
| | | | | WO | 2024216705 A1 | 24-10-2024 |
| US 2022203440 | A1 | | 30-06-2022 | CN | 114694907 A | 01-07-2022 |
| | | | | EP | 4036943 A1 | 03-08-2022 |
| | | | | JP | 7585783 B2 | 19-11-2024 |
| | | | | JP | 2022103587 A | 08-07-2022 |
| | | | | US | 2022203440 A1 | 30-06-2022 |
| US 2022328219 | A1 | | 13-10-2022 | CN | 111653407 A | 11-09-2020 |
| | | | | EP | 3968344 A1 | 16-03-2022 |
| | | | | JP | 7291796 B2 | 15-06-2023 |
| | | | | JP | 2022545759 A | 31-10-2022 |
| | | | | US | 2022328219 A1 | 13-10-2022 |
| | | | | WO | 2022016647 A1 | 27-01-2022 |
| CN 113035556 | A | | 25-06-2021 | NONE | | |
| US 2020005996 | A1 | | 02-01-2020 | CN | 108899190 A | 27-11-2018 |
| | | | | EP | 3591676 A1 | 08-01-2020 |
| | | | | JP | 6941139 B2 | 29-09-2021 |
| | | | | JP | 2020004969 A | 09-01-2020 |
| | | | | US | 2020005996 A1 | 02-01-2020 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 113506665 A
- CN 115732215 A
- CN 111653404 A